# EUROPEAN PATENT SPECIFICATION

(11) **EP 1 734 198 B1**
(45) Date of publication and mention of the grant of the patent: **22.08.2007**
(21) Application number: 06012507.7
(22) Date of filing: 19.06.2006
(51) Int. Cl.: E04B 1/80, E04C 2/20, B29C 44/56

(54) **Method for producing a thermoinsulating panel and panel so obtained**
Wärmedämmendes Paneel und Herstellungsverfahren
Panneau isolant et procédé de fabrication associé

(30) Priority: 17.06.2005 EP 05425437
(43) Date of publication of application: 20.12.2006
(73) Proprietor: Decem S.r.l., 64036 Cellino Attanasio TE (IT)
(72) Inventor: Sboarina, Stefano, 37126 Verona (IT); Chicchirichì, Lorenzo, 64018 Tortoreto (Teramo) (IT)
(74) Representative: Ferreccio, Rinaldo

(56) References cited:
- US-A- 3 607 531
- US-A- 3 906 137
- US-A- 4 154 785

## Description

The present invention refers, in its most general aspect, to a method for manufacturing a thermoinsulating panel in an appropriate extruded plastic material, preferably, though not exclusively, extruded polystyrene foam.

More in particular, the present invention refers to a method for manufacturing a thermoinsulating panel starting from elementary panels of extruded polystyrene foam, or XPS, of predetermined thickness and predetermined width.

The present invention also refers to a thermoinsulating panel of extruded polystyrene foam, obtained with the above-mentioned method.

### Prior art

With particular reference to the building sector and refrigeration industry, the wide use of thermoinsulating panels in expanded polystyrene to make thermally insulated structures is known.

The expanded polystyrene presents itself in the form of a closed-cell cellular structure; the insulating capacity of the insulating panels predominantly depends on this cellular structure.

And it is known that such panels are generally obtained through the extrusion/expansion of polystyrene by way of a die opening substantially shaped as a rectangular slit of determinate dimensions (height and width).

In particular, the slit has a height in the order of a millimetre and a width equal to approximately half of the width of the panel to be obtained.

Although advantageous from different points of view, the aforementioned method of producing thermoinsulating panels according to the prior art has recognised drawbacks that have not been overcome yet.

The main drawback is that with such technique it is difficult to make an extruded panel having a relatively high thickness, in the order of 110-200 mm and, at the same time, a high thermoinsulating capacity, or rather a low thermal conductivity, for example in the order of 0.030 W /mK.

It is indeed known that the thermal conductivity strictly depends on the shape and size of the cells that form the cellular structure of the extruded polystyrene foam. In particular, the panel density being equal, the greater the cell size is, the higher the free space within the panel is and the lower the panel thermoinsulating capacity is. It is further known that the size of the cells mainly depends on the process of expansion/extrusion adopted as well as on the size of the panel to be obtained. In particular, expansion techniques being the same, the greater the thickness of the panel to be obtained with the process of extrusion/expansion is, the greater the size of the cells is.

Thus there is a deterioration of the panel's thermal performance, intended as insulating capacity, for panels having relatively high thickness.

In this regard, it is known that the thermal conductivity values of expanded panels, obtained for example by means of carbon dioxide as expanding gas, increase from approximately 0.030 to 0.040 W / mK with the increase of panel thickness from approximately 20 mm to 200 mm.

To resolve these drawbacks, the prior art has suggested stacking together a plurality of elementary panels of relatively reduced thickness that, thanks to their reduced thickness, have cells of smaller size and a satisfactory thermal conductivity.

The elementary panels are fastened to each other to obtain a stack with height equal to the desired thickness of the final panel.

This known technique nevertheless has the drawback that the final panel thickness is constrained by the thickness of the elementary panel, being made of a multiple of these.

US-A-3,607,531 discloses a technique of stacking together a plurality of elementary panels to obtain a stack with height equal to the desired width of the final panel and cutting the stack to provide a said final panel with improved compressive strength.

The technical problem underlying the present invention is that of devising a method for producing insulating panels in extruded polystyrene foam, preferably having a relatively high thickness, even greater than 110 mm and unconstrained by the thickness of the elementary panels, and ensuring a satisfactory thermoinsulating capacity at the same time.

### Summary of the invention

Such technical problem is solved according to the present invention by a method for producing a thermoinsulating panel of extruded polystyrene foam of predetermined thickness and predetermined width, comprising the following steps:
extruding a mixture comprising molten polystyrene and at least one expanding agent through a die opening in order to obtain elementary panels of extruded polystyrene foam having a predetermined thickness and a closed-cell structure, wherein each elementary panel is extruded so as to obtain a preferential elongation of the cells in a direction parallel to the thickness of the elementary panel,

- stacking a plurality of the elementary panels of extruded polystyrene foam until they reach a determinate stack height equal to said predetermined width of the thermoinsulating panel to be obtained,
- fastening the elementary panels of the stack to form a block, and
- slicing the block in the direction of the height of stacking with slices having thickness equal to said predetermined thickness of the thermoinsulating panel, so that, after the slicing, each slice constitutes said thermoinsulating panel and has extruded cells elongated according to a direction which is orthogonal to the thickness of the slice.

The main advantage of the present invention lies in the possibility of making a thermoinsulating panel having satisfactory thermoinsulating capacity, due to the fact that during the extrusion step, the cells are elongated in a direction parallel to the thickness of the elementary panel, and have a smaller size in a direction that is orthogonal to the thickness of the elementary panel than in a direction that is parallel thereto.

In such a way, after the slicing step, the cells are elongated according to a direction which is orthogonal to the height, or thickness, of the slice/thermoinsulating panel, and therefore the cells have a smaller size in the direction that is parallel to the thickness of the slice/thermoinsulating panel (between two opposing surfaces of the slice or of the thermoinsulating panel) than in the direction of the width of the slice/thermoinsulating panel .

Consequently, taking into account that the thermal resistance of the insulating materials is always measured in the direction of the thickness, this being the direction of the thermal flux, and that the insulating capacity of the thermoinsulating panel predominantly depends on the cellular size, (the smaller the cell size is, the higher the thermoinsulating capacity is) a clear improvement in terms of thermal conductivity has been obtained, compared with prior art thermoinsulating panels having the same thickness and the same panel density.

Accordingly, it should be noted that the thermal insulation is only strictly interrelated with the elongated shape of the cells that are obtained during the extrusion step of the elementary panels.

Therefore the thermal conductivity is no longer correlated with the thickness of the slice/thermoinsulating panel. In such a way, a thermoinsulating panel having relatively high thickness can be sliced without affecting its thermal capacity.

Preferred modalities for carrying out the method according to the invention are described in the dependent claims 2 to 10.

The above-mentioned technical problem is likewise solved by a thermoinsulating panel in accordance with claim 11.

Preferred modalities for manufacturing the thermoinsulating panel according to the invention are described in the dependent claims 12 to 14.

Further features and advantages of the method and thermoinsulating panel according to the present invention shall become clear from the following description of a preferred embodiment thereof, made by way of an indicative and not limiting example with reference to the attached drawings.

### Brief description of the drawings

Figures 1A-1D show respective schematic views of an operative sequence of the method according to the invention;
Figures 2A-2C show respective schematic views of an operative sequence of the method according to the invention in accordance with a further embodiment;
Figure 3 shows a macroscopic view, not to scale, of the cellular structure of a plurality of elementary panels during the stacking step;
Figure 4 shows a block comprising the stacked elementary panels of figure 3;
Figure 5 shows a macroscopic view, not to scale, of the cellular structure of a portion of thermoinsulating panel obtained through the slicing of the block of figure 4;
Figure 6 shows a micrograph of a section of an elementary panel of extruded polystyrene foam having a closed-cell structure of substantially spherical shape;
Figure 7 shows a micrograph of a section of an elementary panel of extruded polystyrene foam having a closed-cell structure of elongated shape according to a favoured orientation.

### Detailed description

With reference to the attached figures, reference numeral 10 indicates, in general, an illustrative scheme of the method according to the invention for manufacturing a thermoinsulating panel 12 of extruded polystyrene foam.

The panel 12 to be obtained has a predetermined thickness S and a predetermined width L.

For conventional purposes, within the scope of the present invention, the term a predetermined width L of the panel 12 to be obtained is to be intended as the extension of one of the sides of the panel 12.

In the case of the illustrated solution, the panel 12 has a rectangular basic shape; in consequence the width L coincides with the value of the shortest side of the panel 12. Nothing prevents however the width L from coinciding with the value of the longest side of the panel.

In accordance with the invention, the thermoinsulating panel 12 is obtained from a plurality of elementary panels 14, or base panels, of extruded polystyrene foam, which have a closed-cell structure 22.

The elementary panels 14 are rectangular of length L1 and width L2 and are made through a process of extrusion of a molten polymer comprising polystyrene and at least one expanding agent. The process of extrusion is carried out, as disclosed here below, through a die opening, for example of rectangular shape.

As expanding gas, carbon dioxide is preferably employed, or a mixture of the same with expanding gases deriving from oil, as for example alkanes (iso-butane), or from syntheses of these last, such as for example fluoroalkanes (difluoroethane).

Ingredients of known type may be added to the polystyrene, in accordance with the modalities known in the sector, such as crosslinking resins, anticollapsing agents, flame retardants, colorants, nucleants or other similar ingredients.

Advantageously, to obtain an improvement of the thermal conductivity of panel 12, the method according to the present invention provides the step of controlling the operative conditions of the extrusion process of the elementary panels 14 in order to obtain polystyrene foam having a determinate closed-cell structure 22.

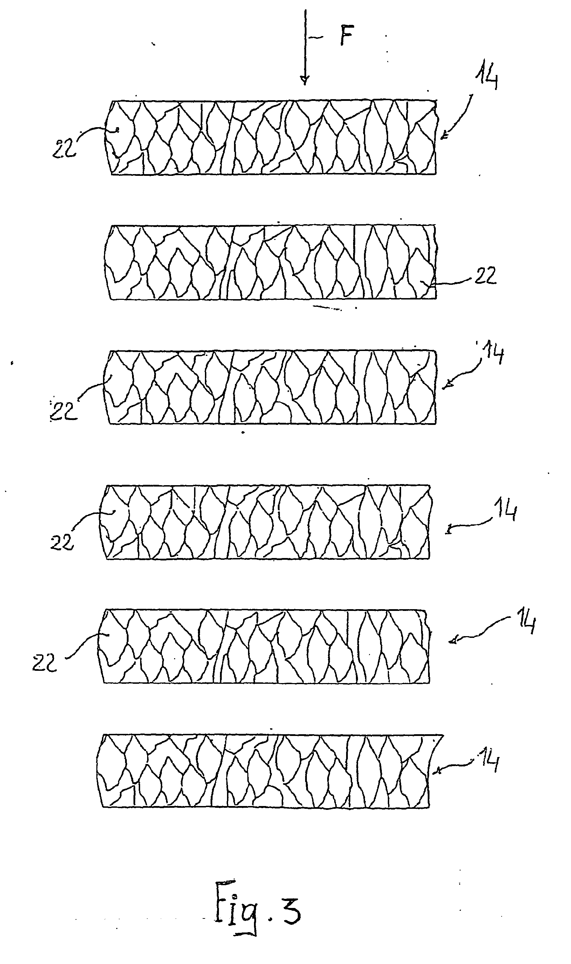

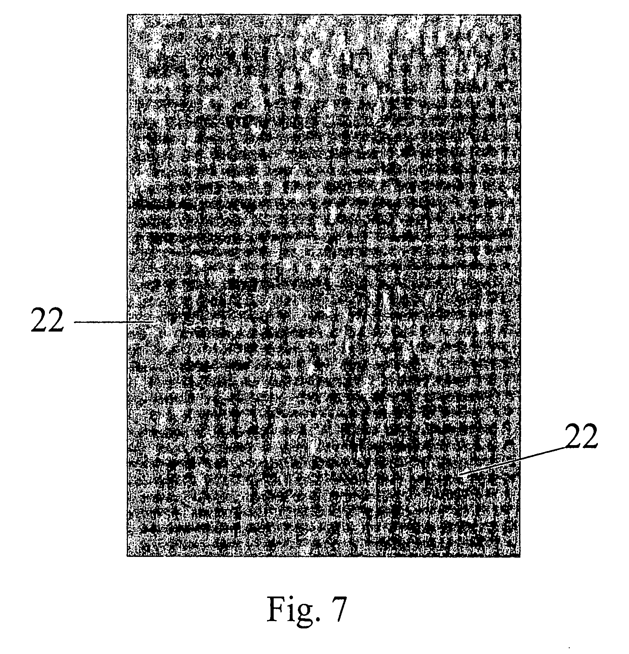

In particular, the extrusion/expansion of the elementary panels 14 is carried out so that the cells 22 of extruded polystyrene foam are preferentially elongated in the direction of the thickness S' of the elementary panel 14 (figures 3 and 7).

In particular, figure 7 illustrates a micrograph of a section of elementary panel 14 in which the cells 22 of extruded polystyrene foam are clearly visible, elongated in the direction of the thickness S'.

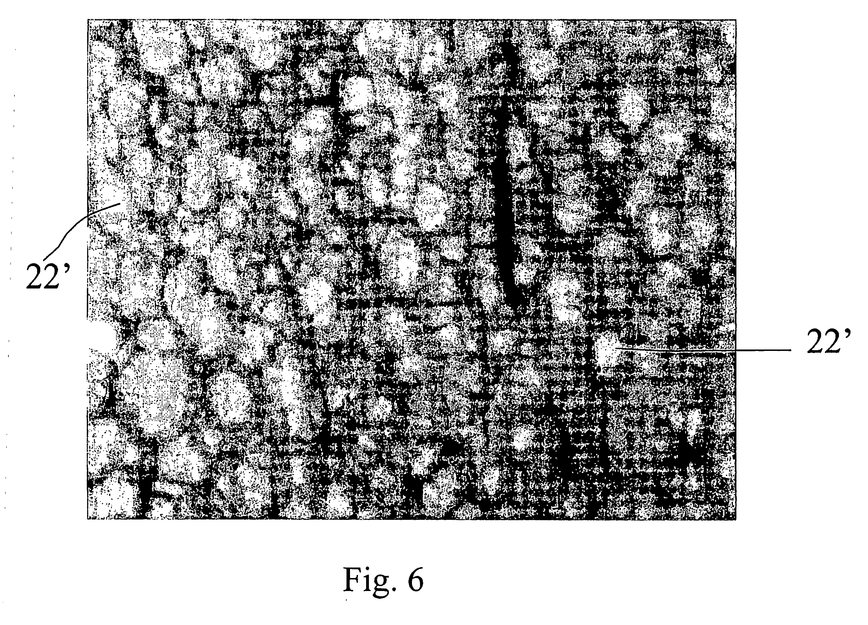

As a comparison, figure 6 illustrates a panel in which the cells 22' have a substantially spherical shape.

Thus it has been obtained that, within each elementary panel 14, the cells 22 are mainly elongated in the direction of the thickness S', or height, of the elementary panels 14, as it is schematically illustrated in figure 3 and in the micrograph of figure 7. In other words, the cells have a size smaller in the direction of the length L1 and width L2 of the elementary panels 14 than in the direction of the thickness S'.

It is clear that the cells 22 of figures 3-5 are not illustrated in actual scale, but are expressly illustrated in a macroscopic view in order to explain in an intuitive manner the direction of preferential elongation of the cells 22 forming the elementary panels 14.

In particular, the cell elongation is obtained by correlating the size of the die opening with respect to the distance of calibration plates that are arranged downstream of the die opening to hold the expanding polystyrene coming out from the die opening.

For example, the elementary panels 14 have been formed by means of an extrusion system comprising two extruders, having circular cross-sections and disposed in succession after one another.

The first extruder has a diameter of 120 mm and the second extruder has a diameter of 200 mm. The second extruder has a die opening (rectangular shape) having height of 1.5 mm and width of 300 mm. The molten polystyrene has been extruded with a flow rate of 750 kg/h.

Two calibration plates are located downstream of the second extruder, wherein the calibration plates are intended to hold the expanding polystyrene coming out from the die opening.

The distance between the two calibration plates obviously coincides with the thickness S' of the elementary panel 14. In particular, to obtain elementary panels 14 having different thickness S', the space between the two calibration plates has been increased in a vertical direction corresponding to a direction parallel to the thickness S' of the elementary panels 14.

Under these conditions, the elementary panels 14 have a density in terms of mass per volume unit comprised between 30 and 35 Kg / m³.

Table 1 reports the values of thickness S' and thermal conductivity of elementary panels 14 that have been obtained with the extrusion system.

**Table 1**

| Plates distance or thickness S' (mm) of the elementary . panels 14 | 30 | 40 | 50 | 60 | 80 | 120 |
|---|---|---|---|---|---|---|
| compression strength (K Pa) | 220 | 240 | 280 | 330 | 360 | 390 |
| thermal conductivity (W/mk) | 0,030 | 0,031 | 0,032 | 0,033 | 0,034 | 0,036 |

It has been experimentally observed that, by increasing the space between the two calibration plates to fill up with the molten polystyrene, a natural lengthening / elongation of the cells of the elementary panels 14 occurs in such direction.

The elongation of the cells can be visually noticed with a microscope.

Alternatively, the elongation of the cells can be tested by analysing the variation of the compression strength and the value of thermal conductivity (W/mk) in the direction of panel thickness S' (the higher the elongation of the cell in the direction of the thickness S' is, the higher the compression strength is).

Consequently, the elementary panels 14 that have a thickness S' comprised preferably between 30 mm and 120 mm, are stacked in a direction F until a stack height is obtained equal to the width L of the thermoinsulating panel 12.

In other words, according to the invention, a high number of elementary panels 14 are stacked until they have reached the value of the width L of panel 12, which is to be obtained.

Subsequently, the elementary panels 14 of the stack are fastened to form a compact block 16.

Preferably, the fastening of the panels is carried out through gluing.

In one solution of the invention, the gluing is carried out with a conventional adhesive, such as for example polyurethane adhesive.

In particular, before completing the stacking, the polyurethane adhesive is distributed in a uniform manner on the surface of the elementary panels 14.

According to a further embodiment, the fastening of the elementary panels 14 occurs through the heating of the surface area of the panels 14 themselves, taking advantage of the thermoplastic properties of these last. Each surface of the elementary panels 14 is heated and made adhere to the adjacent heated surface of a panel 14 thereby obtaining the desired joining of the panels.

Subsequently, block 16 is cut into slices in the direction of the stacking height F of the elementary panels 14 with slices of thickness So corresponding with the thickness S of the panel 12 to be obtained.

In substance, the cut of the block 16 is carried out in such a manner that the width or cut step corresponds with a predetermined thickness S of the thermoinsulating panel 12 to be obtained. Thus for each slice a panel 12 of thickness S is obtained, formed by adjacent portions 14' of the elementary panels 14 and having overall width L.

The thickness So of the slice is therefore chosen from time to time based on the thickness S desired for the thermoinsulating panel 12 which must be made.

It follows that, according to the invention, the final thickness S of the panel 12 is completely unconstrained by the thickness S' of the elementary panels 14 and is correlated only with the cut step.

It should be noted moreover that, with the variation of the thickness S of the obtained panel 12, the thermal conductivity of the panel 12 does not substantially vary, other conditions being the same.

Indeed, the thermal conductivity depends on the process of extrusion of the elementary panels 14.

In particular, thanks to the method according to the invention, the selection of elementary panels 14 with cells 22 elongated in the direction of the elementary panel thickness S' involves an improvement of thermal conductivity, for the following reasons.

From figure 3 it is indeed possible to observe that, according to the method of the present invention, the elementary panels 14 are stacked in the direction F of preferential elongation of the extruded cells 22.

In substance, the direction of elongation coincides with the direction F of the height of the block 16 of stacked panels. Consequently, the block 16 is cut into slices according to a direction that is parallel to the direction of elongation of the cells 22.

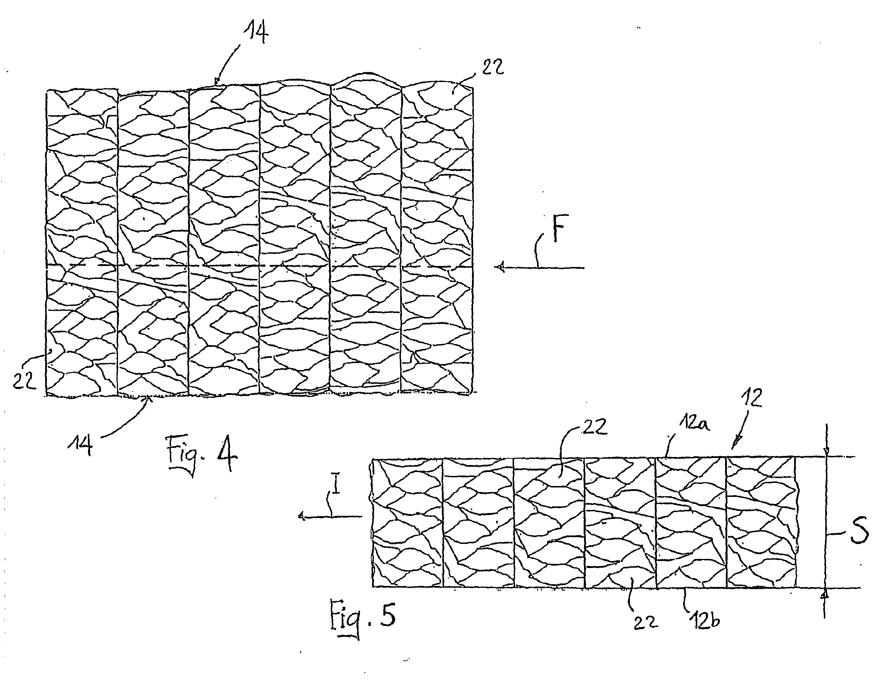

In figure 4 it is possible to recognise the above-mentioned correspondence between the slicing direction of the elementary panels 14 and the elongated orientation of the cells 22. In particular, in figure 4, the cutting direction of the elementary panels 14 is illustrated with a dashed line.

Due to the privileged orientation, after the slice, a panel 12 is thus obtained in which the extruded cells 22 are elongated according to a direction that is orthogonal to the height, or thickness S, of the final thermoinsulating panel 12.

Figure 5 partially illustrates, in schematic mode, a panel 12 obtained from the slice of the block 16, in which the orientation of the cells 22 with respect to its thickness S is visible. In particular, it has been observed that, due to this preferential orientation, the cells 22 of the panel 12 have a size smaller in the direction of the thickness S of the panel 12 than in the direction of the width L.

In other words, the cells 22 have a smaller size (i.e. the cell walls are more compact) between the two opposing surfaces 12a and 12b of the panel 12.

Consequently, since the thermal resistance of the insulating materials is always measured in the direction of the thickness S, this being the direction of the thermal flux, a clear improvement has been obtained, that is to say a lowering of even 10% of the thermal conductivity of the panel 12 with respect to the thermal conductivity of the elementary panels 14, to a value of approximately 0.026 - 0.027 W / Km and, therefore, an improvement of the performance of thermal insulation of a panel of thickness greater than 110 mm.

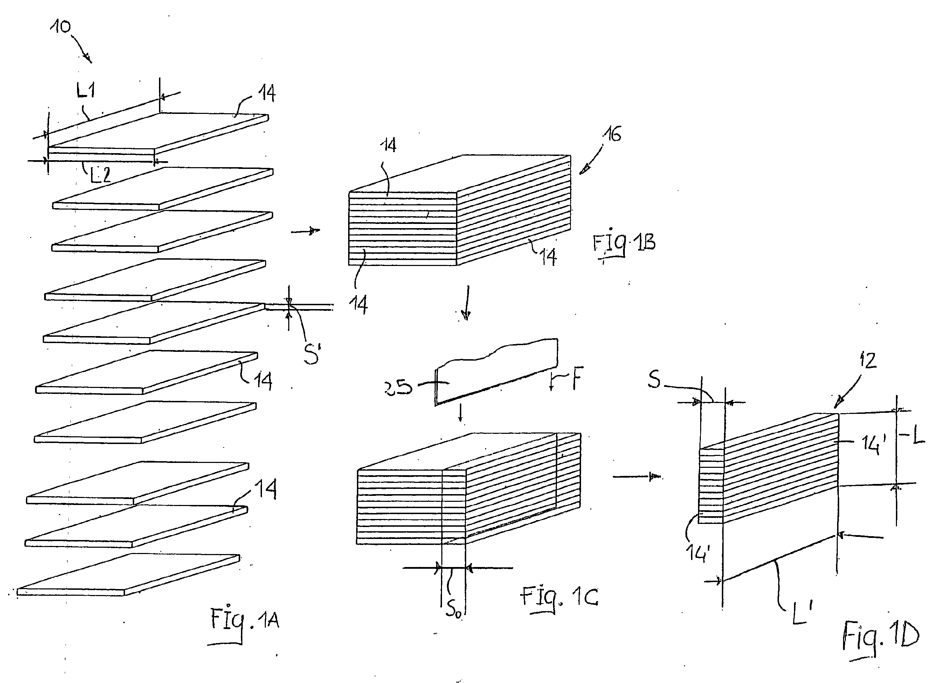

With reference to figure 1C, number 25 schematically indicates a cutting element.

It is possible to observe that the variation of the cut distance may be obtained in a simple manner by appropriately controlling the position of cutting element 25 with respect to block 16, thus permitting the obtainment of any more or less high thickness S of panel 12.

The cutting may be carried out according to a known modality, such as for example those described below.

Preferably the modality of the cutting is chosen in relation with the modality of the fastening of the elementary panels 14.

For example, in the case of thermoplastic fastening through the heating of the panel 14 surfaces, a hot wire cutting of known type may be carried out.

On the contrary, in the case of gluing by way of an adhesive substance, a cut is carried out through the removal of material.

With reference to the illustrated solution, the preferential size and shape of the elementary panels 14 and the final thermoinsulating panel 12 shall now be described.

The elementary panels 14 have a substantially rectangular shape, for example of length L1 equal to 3000 mm and width L2 equal to 1200 or 600 mm. In this manner, the elementary panels 14, once stacked, form a block 16 substantially having the form of a parallelepiped with a rectangular base. It is clear that the sizes of the elementary panels 14 are absolutely optional within the scope of the present invention, and are chosen each time according to necessity.

The height, which, as mentioned above, is equal to width L of the final thermoinsulating panel 12, obviously depends on the number of stacked elementary panels 14.

Regarding the size of the panel 12, in the case of the solution illustrated in figures 1C and 1D, the cutting element 25 is operated so as to cut the block parallel to length L1 of the elementary panels 14 with a slice thickness So, for example of approximately 200 mm, thereby obtaining a panel 12 of narrow and long shape.

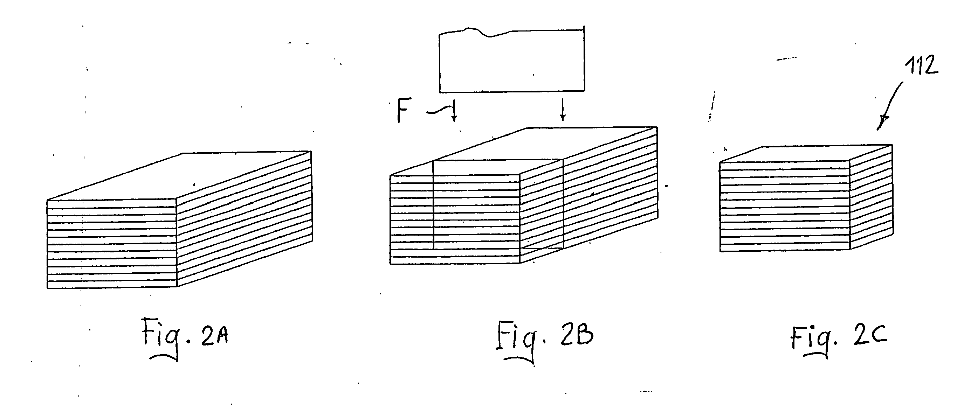

In the case of the solution illustrated in figure 2B, the cutting element 25 is operated so as to cut the block parallel to length L2 of the elementary panels 14, thereby obtaining a panel 112 having a more reduced length.

The main advantage of the present invention lies in the possibility of making a thermoinsulating panel of extruded polystyrene foam having a high thickness as necessary, unconstrained by the thickness of the elementary panels.

Moreover a thermoinsulating panel has been obtained having satisfactory thermal conductivity, which depends on the extrusion process of the elementary panels 14.

In addition it should be noted that according to the art elementary panels with cells elongated in the direction of the thickness are normally not used since the elongation in the direction of the thickness, or rather in the direction of the thermal flux, determines an increase of the cell size in such a direction, and then a worsening of thermal conductivity.

On the contrary, thanks to the method according to the invention, the selection of elementary panels with cells elongated in the direction of the thickness involves an improvement of thermal conductivity.

Another advantage of the present invention lies in the fact that it is possible to obtain, in a simple and economic manner, thermoinsulating panels of any thickness, thermal conductivity being equal.

In particular, to vary the thickness of the panel it is sufficient to set a different cutting position of the cutting element, with respect to the compact block.

A further advantage of the present invention lies in the fact that panels of relatively high thickness may be made by utilising carbon dioxide or a mixture based on carbon dioxide as expanding gas. It is indeed known that the carbon dioxide, or a mixture of the same, may be employed as expanding gas to make panels with relatively reduced thickness.

Of course, a man skilled in the art can make several changes and variants to the method for producing a thermoinsulating panel of extruded plastic material and the panel thus obtained as described above, in order to satisfy contingent and specific requirements, all of which are in any case covered by the scope of protection of the present invention, as defined by the following claims.

## Claims

1. Method for producing a thermoinsulating panel of extruded polystyrene foam of predetermined thickness (S) and predetermined width (L), comprising the following steps:
extruding a mixture comprising molten polystyrene and at least one expanding agent through a die opening in order to obtain elementary panels (14) of extruded polystyrene foam having a predetermined thickness (S') and a closed-cell structure (22), wherein each elementary panel (14) is extruded so as to obtain a preferential elongation of the cells (22) in a direction parallel to the thickness (S') of the elementary panel (14),
- stacking a plurality of the elementary panels (14) of extruded polystyrene foam until they reach a determinate stack height equal to said predetermined width (L) of the thermoinsulating panel (12) to be obtained,
- fastening the elementary panels (14) of the stack to form a block (16), and
- slicing the block (16) in the direction of the height (F) of stacking with slices having thickness (S₀) equal to said predetermined thickness (S) of the thermoinsulating panel (12), so that, after the slicing, each slice constitutes said thermoinsulating panel and has extruded cells (22) elongated according to a direction which is orthogonal to the thickness (So) of the slice.

2. Method according to claim 1, **characterised in that** the cell elongation is obtained by correlating the size of the die opening with respect to the distance between two calibration plates that are arranged downstream of the die opening to hold the expanding polystyrene coming out from the die opening.

3. Method according to claim 1 or 2, **characterised in that** the die opening is of rectangular shape having height of 1.5 mm and width of 300 mm and that the space between the calibration plates is comprised between 30 and 120 mm.

4. Method according to any one of the claims from 1 to 3, **characterised in that** the slice has a thermal conductivity comprised between approximately 0.026 and 0.027 W/mK.

5. Method according to any one of the claims from 1 to 4, **characterised in that** each slice is cut so as to obtain a panel of determinate thickness (S) of at least 110 mm.

6. Method according to any one of the claims from 1 to 5, **characterised in that** each slice is cut so as to obtain a panel of thickness (S) equal to approximately 200 mm.

7. Method according to any one of the claims from 1 to 6, **characterised in that** the elementary panels (14) are extruded through the employment of carbon dioxide as expanding gas.

8. Method according to claim 1, **characterised in that** the elementary panels (14) are fastened through gluing.

9. Method according to claim 8, **characterised in that** the gluing is carried out before the completion of the stacking of the plates (14), by depositing an adhesive on the surface of the elementary panels (14) and subsequently stacking the elementary panels (14).

10. Method according to any one of the claims from 1 to 7, **characterised in that** the elementary panels (14) are joined through the heating of the surfaces of the elementary panels (14) and mutual adhesion of the heated surfaces.

11. Thermoinsulating panel of extruded polystyrene foam, comprising a plurality of adjacent bars (14'), fastened together in a single body, said panel having a determined thickness (S), **characterised in that** said panel is obtainable according to the method in accordance with any one of the preceding claims from 1 to 10, in such a way that the cells (22) of the thermoinsulating panel (12) are elongated according to a direction which is substantially orthogonal to the thickness (S) of the thermoinsulating panel.

12. Thermoinsulating panel according to claim 11, having a thermal conductivity comprised between approximately 0.026 and 0.027 W /mK.

13. Thermoinsulating panel according to claim 11 or 12, having a thickness of at least 110 mm.

14. Thermoinsulating panel according to any one of the claims from 11 to 13, having a thickness of 200 mm.

## Patentansprüche

1. Verfahren zur Herstellung einer wärmeisolierenden Tafel aus extrudiertem Polystyrolschaum mit einer vorbestimmten Dicke (S) und einer vorbestimmten Breite (L), folgende Schritte umfassend:
- Extrudieren eines Gemischs, das geschmolzenes Polystyrol und zumindest ein Blähmittel umfasst, durch eine Matrizenöffnung, um Ausgangstafeln (14) aus extrudiertem Polystyrolschaum mit einer vorbestimmten Dicke (S') und geschlossenzelliger Struktur (22) zu erhalten, wobei jede Ausgangstafel (14) so extrudiert wird, dass eine bevorzugte Streckung der Zellen (22) in einer zur Dicke (S') der Ausgangstafel parallelen Richtung erhalten wird,
- Übereinanderstapeln mehrerer der Ausgangstafeln (14) aus extrudiertem Polystyrolschaum, bis sie eine genau festgelegte Stapelhöhe erreichen, die der vorbestimmten Breite (L) der wärmeisolierenden Tafel (12) entspricht, die erhalten werden soll,
- Befestigen der Ausgangstafeln (14) des Stapels, um einen Block (16) zu bilden, und
- Zerteilen des Blocks (16) in Richtung der Höhe (F) des Stapels zu Abschnitten mit einer Dicke (S₀), die der vorbestimmten Dicke (S) der wärmeisolierenden Tafel (12) entspricht, so dass nach dem Zerteilen ein Abschnitt jeweils eine wärmeisolierende Tafel bildet und extrudierte Zellen (22) aufweist, die in einer Richtung gestreckt sind, die senkrecht zur Dicke (S₀) des Abschnitts liegt.

2. Verfahren nach Anspruch 1, **dadurch gekennzeichnet, dass** die Zellenstreckung erhalten wird, indem die Größe der Matrizenöffnung hinsichtlich des Abstands zwischen zwei Kalibrierungsplatten abgestimmt wird, die der Matrizenöffnung nachgeschaltet angeordnet sind, um das die Matrizenöffnung verlassende, expandierende Polystyrol zu halten.

3. Verfahren nach Anspruch 1 oder 2, **dadurch gekennzeichnet, dass** die Matrizenöffnung von rechteckiger Form mit einer Höhe von 1,5 mm und einer Breite von 300 mm ist, und der Raum zwischen den Kalibrierungsplatten zwischen 30 und 120 mm misst.

4. Verfahren nach einem der Ansprüche 1 bis 3, **dadurch gekennzeichnet, dass** der Abschnitt eine Wärmeleitfähigkeit zwischen ungefähr 0,026 und 0,027 W/mK hat.

5. Verfahren nach einem der Ansprüche 1 bis 4, **dadurch gekennzeichnet, dass** jeder Abschnitt so abgeschnitten wird, dass eine Tafel mit einer genau festgelegten Dicke (S) von mindestens 110 mm erhalten wird.

6. Verfahren nach einem der Ansprüche 1 bis 5, **dadurch gekennzeichnet, dass** jeder Abschnitt so abgeschnitten wird, dass eine Tafel mit einer Dicke (S) von ungefähr gleich 200 mm erhalten wird.

7. Verfahren nach einem der Ansprüche 1 bis 6, **dadurch gekennzeichnet, dass** die Ausgangstafeln (14) unter Verwendung von Kohlendioxid als Expandiergas extrudiert werden.

8. Verfahren nach Anspruch 1, **dadurch gekennzeichnet, dass** die Ausgangstafeln (14) durch Kleben befestigt werden.

9. Verfahren nach Anspruch 8, **dadurch gekennzeichnet, dass** das Kleben vor Vollendung des Übereinanderstapelns der Tafeln (14) ausgeführt wird, indem ein Klebstoff auf die Oberfläche der Ausgangstafeln (14) aufgebracht wird und danach die Ausgangstafeln (14) übereinander gestapelt werden.

10. Verfahren nach einem der Ansprüche 1 bis 7, **dadurch gekennzeichnet, dass** die Ausgangstafeln (14) durch Erwärmung der Oberflächen der Ausgangstafeln (14) und gegenseitige Anhaftung der erwärmten Oberflächen verbunden werden.

11. Wärmeisolierende Tafel aus extrudiertem Polystyrolschaum, die mehrere aneinander angrenzende Streifen (14') umfasst, die zu einem Einzelkörper verbunden sind, wobei die Tafel eine vorbestimmte Dicke (S) hat, **dadurch gekennzeichnet, dass** die Tafel nach dem Verfahren gemäß einem der vorhergehenden Ansprüche 1 bis 10 erhalten werden kann, derart, dass die Zellen (22) der wärmeisolierenden Tafel (12) in einer Richtung gestreckt sind, die im Wesentlichen senkrecht zur Dicke (S) der wärmeisolierenden Tafel liegt.

12. Wärmeisolierende Tafel nach Anspruch 11, mit einer Wärmeleitfähigkeit zwischen ungefähr 0,026 und 0,027 W/mK.

13. Wärmeisolierende Tafel nach Anspruch 11 oder 12, mit einer Dicke von mindestens 110 mm.

14. Wärmeisolierende Tafel nach einem der Ansprüche 11 bis 13, mit einer Dicke von 200 mm.

## Revendications

1. Procédé de fabrication d'un panneau d'isolation thermique en mousse de polystyrène extrudée présentant une épaisseur prédéterminée (S) et une largeur prédéterminée (L), comprenant les étapes suivantes consistant à :
- extruder un mélange comprenant un polystyrène fondu et au moins un agent d'expansion, à travers une ouverture de filière/buse afin d'obtenir des panneaux élémentaires (14) de mousse de polystyrène extrudée présentant une épaisseur prédéterminée (S') et une structure de cellules fermées (22), dans lequel chaque panneau élémentaire (14) est extrudé afin d'obtenir une élongation préférentielle des cellules (22) dans une direction parallèle à l'épaisseur (S') du panneau élémentaire (14),
- empiler une pluralité de panneaux élémentaires (14) de mousse de polystyrène extrudée jusqu'à ce qu'ils atteignent une hauteur d'empilement déterminée égale à ladite largeur prédéterminée (L) du panneau d'isolation thermique (12) à obtenir,
- attacher les panneaux élémentaires (14) de la pile de manière à former un bloc (16), et
- trancher le bloc (16) dans la direction de la hauteur (F) de l'empilement, en tranches qui présentent une épaisseur (S₀) égale à ladite épaisseur prédéterminée (S) du panneau d'isolation thermique (12), de telle sorte que, après le découpage en tranches, chaque tranche constitue ledit panneau d'isolation thermique et présente des cellules extrudées (22) allongées selon une direction qui est orthogonale à l'épaisseur (S₀) de la tranche.

2. Procédé selon la revendication 1, **caractérisé en ce que** l'élongation des cellules est obtenue en corrélant la taille de l'ouverture de filière/buse par rapport à la distance entre deux plaques de calibrage qui sont agencées en aval de l'ouverture de filière/buse pour contenir le polystyrène en expansion qui sort de l'ouverture de filière/buse.

3. Procédé selon l'une quelconque des revendications 1 ou 2, **caractérisé en ce que** l'ouverture de filière/buse a une forme rectangulaire qui présente une hauteur de 1,5 mm et une largeur de 300 mm et **en ce que** l'espace qui se situe entre les plaques de calibrage est compris entre 30 mm et 120 mm.

4. Procédé selon l'une quelconque des revendications 1 à 3, **caractérisé en ce que** la tranche présente une conductivité thermique comprise approximativement entre 0,026 W /m·K et 0,027 W / m·K.

5. Procédé selon l'une quelconque des revendications 1 à 4, **caractérisé en ce que** chaque tranche est découpée afin d'obtenir un panneau qui présente une épaisseur déterminée (S) au moins égale à 110 mm.

6. Procédé selon l'une quelconque des revendications 1 à 5, **caractérisé en ce que** chaque tranche est découpée afin d'obtenir un panneau qui présente une épaisseur (S) approximativement égale à 200 mm.

7. Procédé selon l'une quelconque des revendications 1 à 6, **caractérisé en ce que** les panneaux élémentaires (14) sont extrudés en faisant appel à du gaz carbonique en tant que gaz d'expansion.

8. Procédé selon la revendication 1, **caractérisée en ce que** les panneaux élémentaires (14) sont attachés par collage.

9. Procédé selon la revendication 8, **caractérisé en ce que** le collage est exécuté avant l'achèvement de l'empilement des plaques (14), en déposant un adhésif sur la surface des panneaux élémentaires (14) et en empilant par la suite les panneaux élémentaires (14).

10. Procédé selon l'une quelconque des revendications 1 à 7, **caractérisé en ce que** les panneaux élémentaires (14) sont joints par le chauffage des surfaces des panneaux élémentaires (14) et une adhérence mutuelle des surfaces chauffées.

11. Panneau d'isolation thermique en mousse de polystyrène extrudée, comprenant une pluralité de barres adjacentes (14'), attachées ensemble pour former un seul corps, ledit panneau présentant une épaisseur déterminée (S), **caractérisé en ce que** ledit panneau est obtenu grâce au procédé selon l'une quelconque des revendications précédentes 1 à 10, de telle manière que les cellules (22) du panneau d'isolation thermique (12) soient allongées selon une direction qui est sensiblement orthogonale à l'épaisseur (S) du panneau d'isolation thermique.

12. Panneau d'isolation thermique selon la revendication 11, présentant une conductivité thermique comprise approximativement entre 0,026 W / m·K et 0,027 W / m·K.

13. Panneau d'isolation thermique selon l'une quelconque des revendications 11 ou 12, présentant une épaisseur au moins égale à 110 mm.

14. Panneau d'isolation thermique selon l'une quelconque des revendications 11 à 13, présentant une épaisseur égale à 200 mm.
